# EUROPEAN PATENT SPECIFICATION

(11) **EP 1 897 783 B1**
(45) Date of publication and mention of the grant of the patent: **02.06.2010**
(21) Application number: 07253497.7
(22) Date of filing: 04.09.2007
(51) Int. Cl.: B62D 1/184

(54) **Toothed cam clamping device for adjustable steering column**
Zahnschienen-Klemmvorrichtung für eine verstellbare Lenksäule
Disposition de fixation de came dentelée pour colonne de direction réglable

(30) Priority: 05.09.2006 GB 0617514
(43) Date of publication of application: 12.03.2008
(73) Proprietor: NSK Steering Systems Europe Limited, Maidenhead, Berkshire SL6 6TB (GB); NSK Limited, Shinagawa-ku Tokyo 141-8560 (JP)
(72) Inventor: Barton, Laurence George Herbert, Coventry, West Midlands CV6 4QH (GB)
(74) Representative: Feakins, Graham Allan

(56) References cited:
- EP-A- 0 600 700
- EP-A- 0 802 104
- DE-A1- 19 827 464
- FR-A- 2 687 628
- US-A1- 2006 005 658

## Description

This invention relates to a toothed cam clamping device for an adjustable steering column.

According to the present invention, there is provided a clamping mechanism for an adjustable steering column for a vehicle, comprising an actuator coupled to a clamping device for clamping the steering column in a desired position, the clamping device acting upon a steering column mounting means, thereby to clamp the steering column, wherein the clamping device includes a cam mechanism to create clamped and unclamped conditions and the cam mechanism includes a toothed drive cam with a camming face which carries a peripheral toothed profile engaging a toothed rack, which together form a rack and pinion mechanism, the drive cam reacting with a driven cam to provide the clamped and unclamped conditions; characterised in that drive of the toothed rack is electrically effected by means of a reversible electric motor and wherein gearing is provided between a master drive spindle of the motor and a slave driven spindle, the slave driven spindle carrying a thread acting as a worm about which is mounted the rack, which has an internal, axial thread engaging with the worm.

The rack and pinion mechanism may be of a design similar to that shown and described in GB-A-2 327 257, but is particularised by the drive cam itself incorporating pinion teeth.

The cam mechanism itself can incorporate features of, for example, the cam and roller arrangement shown and described in EP-A-0 600 700.

With the present construction, however, a significant saving of space is achieved by adapting one of the cam components to serve the combined purpose of a cam with a toothed pinion of the rack and pinion mechanism.

Rotation of the toothed cam between clamped and unclamped conditions is achieved by causing the pinion to be driven axially of itself in a translatory motion.

It follows that, with the slave spindle held against axial movement, the rack, captivated in at least one slideway, will itself be caused to be moved axially of itself, thereby to rotate the toothed drive cam upon rotation in one direction or the other of the slave driven spindle.

To facilitate further space saving, the drive cam and/or its toothed profile need not be completely circular in profile but need only form as much of a segment of a circle as is required to enable the cam face to be brought into and out of camming engagement with a co-operating cam face of a driven cam of the cam mechanism to provide the clamping and unclamping conditions of the steering column.

The toothed profile of the drive cam can be formed directly on the periphery of the drive cam or can be a toothed segment joined to the drive cam and extending from a lateral face of the drive cam concentrically of the axis of rotation of the drive cam.

The drive cam and its toothed pinion part may be made of a plastics material or of a metal such as steel, or a metal alloy.

A further cam face hereinafter called the idler or driven cam, with which the drive cam co-operates to produce the clamping and unclamping forces, may also be made of the same or similar materials.

The driven cam may be fixed to a component such as a steering column support bracket or actually forms part of it, or may be fixed to or integral with a separate mounting part. This part may be an inner side plate of a casing enclosing the actuator mechanism (motor, gearing etc.)

A clamping bolt passes through the operational axis of the cam mechanism and through slots in at least one leg of a steering column mounting bracket, as well as at least one member forming part of or joined to a steering column support tube in which the steering column rotates for steering purposes, these parts including adjoining areas which form the clamping surfaces of the clamping mechanism. The clamping bolt axis is at right angles to the axis of the steering column.

At least one pack of interleaved lamellæ may be provided, in known manner, with the clamping bolt passing through slots in them, to enhance the clamping effect of the clamping mechanism.

Thus, the cam faces of the driven and idler cams, which are at right angles to the clamping bolt, with the idler cam tightened/fixed on the clamping bolt, act to draw the clamping bolt along its axis in one direction or the other or to allow it to relax, so as to provide the clamped/unclamped conditions of the steering column upon rotation of the driven cam. The slots are provided in known manner to permit movement between the relatively moving parts that provide the clamping effort between the steering column and its mounting, the slots in the steering column bracket allowing for rake adjustment and the slots associated with the steering column support member allowing for reach adjustment.

At least one of the camming surfaces may include rollers, as disclosed in EP-A-0 600 700, or may have simple, raised profiles, which slide into or out of engagement with a profiled cam track of the camming surface of the other cam face in traditional manner, such as the construction shown and described in GB-A-2 375 809.

The steering column, as is usual, may be rake and/or reach adjustable.

The whole construction of the cam mechanism is arranged to be sufficiently compact that it can be incorporated within an existing, known form of casing for an adjustable steering column clamping mechanism, with only minor modification.

The invention also extends to an adjustable steering column for a vehicle incorporating a clamping mechanism essentially as defined above.

For a better understanding of the invention and to show how the same may be carried into effect, reference will now be made, by way of example, to the accompanying drawings, in which:-
Fig. 1 is a diagrammatic cut-away sectional view of an actuator assembly of a clamping mechanism for an adjustable steering column for a vehicle,
Fig. 2 is a diagrammatic, exploded, perspective view, which illustrates the basic concept of the present clamping mechanism,
Fig. 3 is a diagrammatic view illustrating a cam with pinion of the actuator assembly and how weight and space saving can be achieved, and
Fig. 4 is a view similar to Fig. 2 but showing a possible modification.

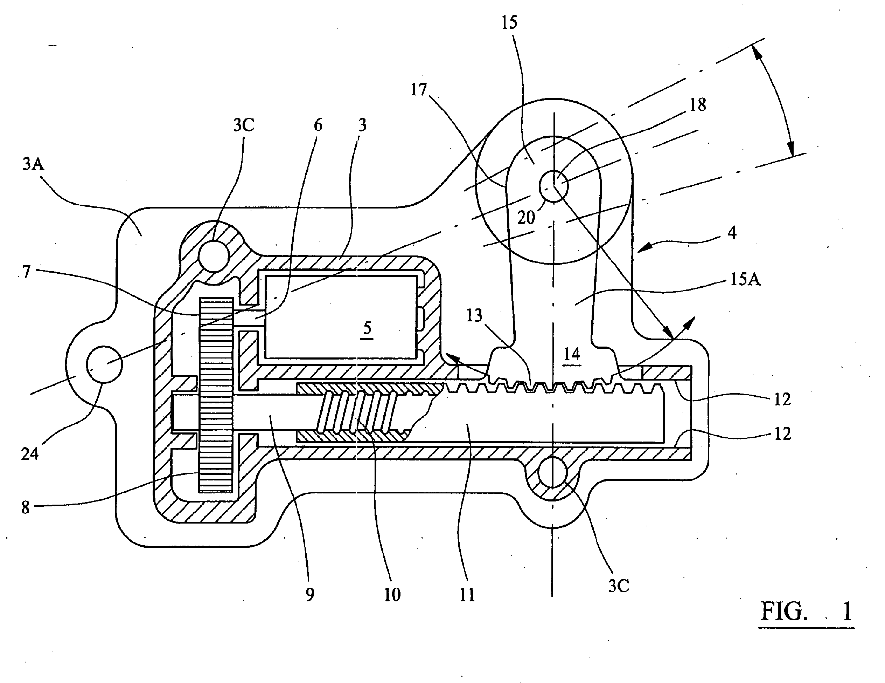

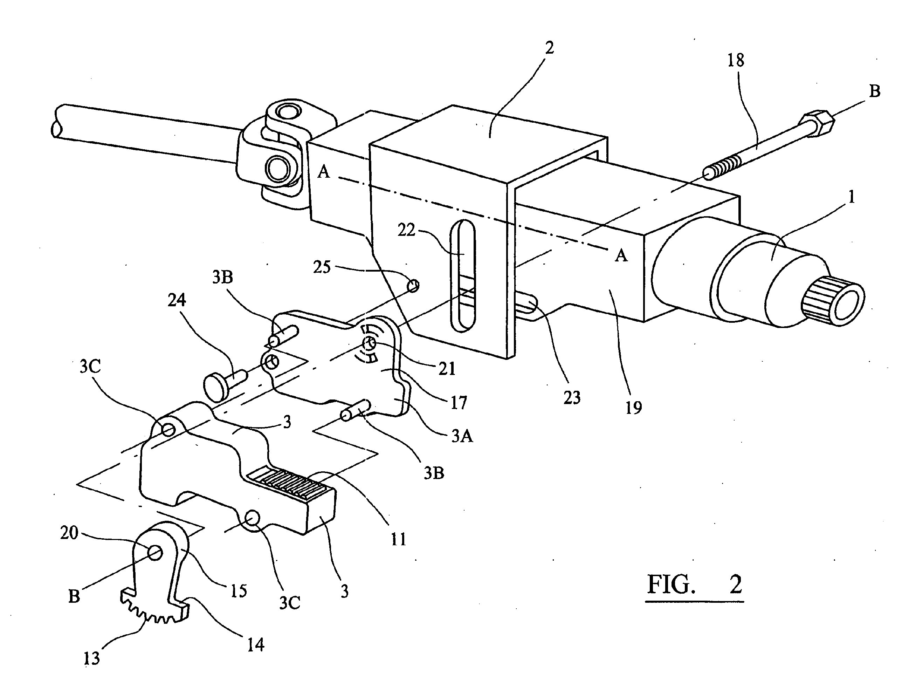

Figs. 1 and 2 show the general arrangement of a clamping mechanism for an adjustable steering column for a vehicle.

The general direction of the axis of a steering column 1 is shown by the line A-A, whilst the general axis of the clamping effort of the clamping mechanism is shown by the line B-B.

The general assembly includes a steering column mounting bracket 2, which in this case incorporates a casing 3 which houses the drive end of a motorised actuator assembly 4 of the clamping mechanism. Visible is an electric motor 5 having a drive spindle 6 on which is mounted a drive gear 7 engaging a driven gear 8 mounted about a slave spindle 9.

The slave spindle 9 carries a worm 10 which engages with an internal thread of a toothed rack 11 which is mounted for axial reciprocation in slideways 12 within the casing 3. The slideways 12 may be formed out of the body of the casing itself.

The rack 11 engages with teeth 13 of a pinion 14 formed on the external profile of a drive cam 15.

An inner face of the drive cam 15 is provided with a lifting cam profile 16 which engages with a corresponding driven cam face 17 mounted on a clamping bolt 18 passing through the mounting bracket 2 and flanges of a support bracket 19. The clamping bolt 18 acts in known manner upon tightening or loosening of clamping effort through the cam surfaces to provide the clamped/unclamped conditions of the steering column.

As mentioned in the introduction, the basic clamping assembly can comprise at least one pack of interleaved lamellæ, not shown, associated with the steering column mounting bracket 2 and steering column support bracket 19, all tightened or loosened by means of the clamping bolt 18, to clamp or un-clamp the steering column 1 in rake and/or reach adjustment mode.

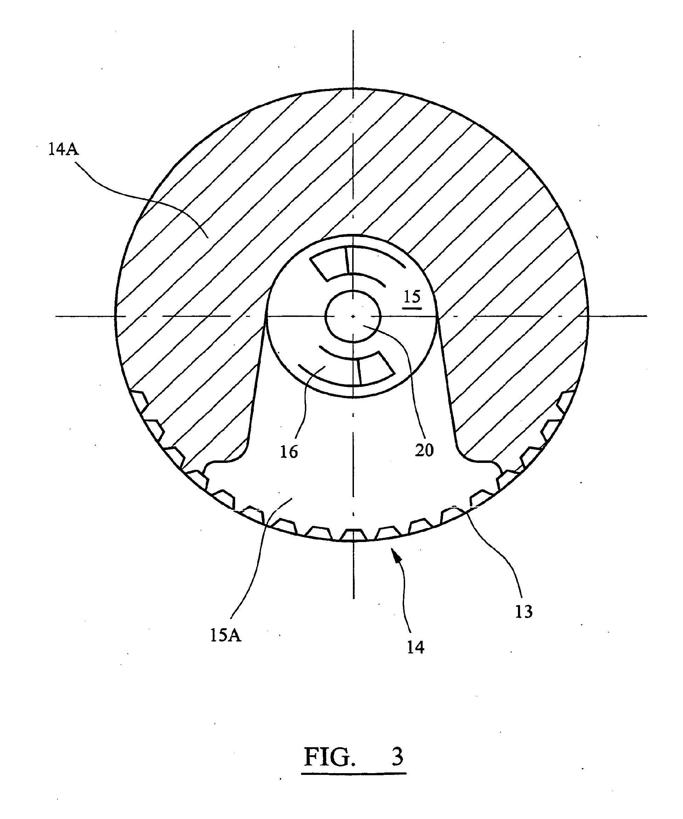

Figure 3 is a view showing the drive cam 15 carrying the segmental toothed pinion 14 which extends from an outer peripheral portion of the cam 15. The shaded area 14A is not required and illustrates how weight and space may be saved within the confines of a vehicle steering column clamping mechanism.

It will be appreciated that the clamping bolt 18 passes through the apertures 20, 21 shown in the cams 15 and 17, respectively.

In known manner, slots 22 are provided in the steering column mounting bracket 2 to allow the steering column 1 to achieve its rake adjustment through the clamping bolt 18, whilst slots 23 are provided in the steering column support bracket 19 to permit reach adjustment of the steering column through the clamping bolt.

The drive cam 15 is integral with the pinion 14 and engages the driven cam 17, which is formed, by pressing for example, on an inner face of a side plate 3A of the casing 3. The inner face of the side plate 3A is provided with securing lugs 3B which mate with corresponding mounting apertures 3C in the main body of the casing 3. This permits easy assembly of the components of the actuator assembly.

To permit rake adjustment, the whole motorised actuator assembly 4 is mounted for pivotal movement remote from the line of one of the rake adjustment slots 22 on and about a pivot pin 24 fitting in an aperture 25 in an outer face of the steering column mounting bracket 2. Of course, the pivot pin 24 may be fixed to the side plate 3A and allowed to pivot in the aperture 25, or the pivot pin may be free to rotate in both the plate 3A and bracket aperture 25. The whole assembly is thus able to move with and therefore accommodate movement of the clamping bolt 18 in the slots 22 in both flanges of the mounting bracket about the pivot pin 24, as indicated by the double arrows at the upper, right-hand side of Fig 1.

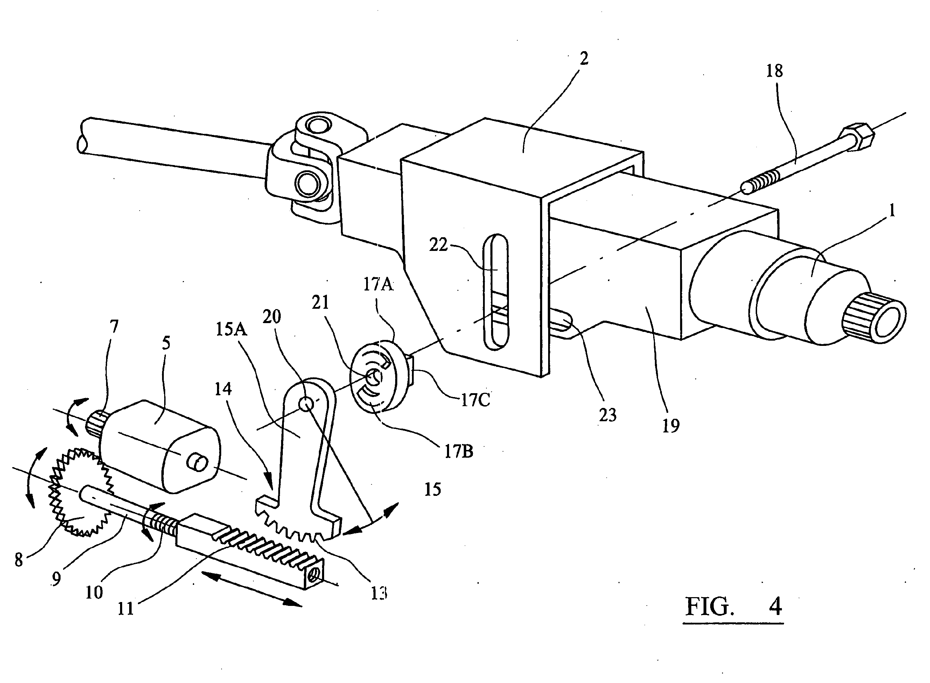

Fig. 4 shows a possible modification where the driven cam is not integrated with the casing plate 3A but is a separate driven cam component 17A with camming parts 17B. Especially in this case, the cam component is provided with a slideable block 17C which, when the assembly is mounted, fits in the rake adjustment slot 22 itself for guidance, the clamping bolt 18 passing through an extension of the aperture 21 of the driven cam 17A within the slideable block 17C, with the driven cam restrained by the mounting bracket 2.

In the examples illustrated, the combined drive cam/pinion arrangement is illustrated with an extended or elongate portion 15A to gain effort through leverage but it will be appreciated that the cam/pinion profile can be basically circular, but with possibly only taking the form of a segment of a circle, such as a quadrant.

## Claims

1. A clamping mechanism for an adjustable steering column for a vehicle, comprising an actuator (4) coupled to a clamping device for clamping the steering column in a desired position, the clamping device acting upon a steering column mounting means, thereby to clamp the steering column, wherein the clamping device includes a cam mechanism to create clamped and unclamped conditions and the cam mechanism includes a toothed drive cam (15) with a camming face which carries a peripheral toothed profile (13) engaging a toothed rack (11), which together form a rack and pinion mechanism, the drive cam reacting with a driven cam (17) to provide the clamped and unclamped conditions, **characterised in that** drive of the toothed rack (11) is electrically effected by means of a reversible electric motor (5) and wherein gearing is provided between a master drive spindle (6) of the motor (5) and a slave driven spindle, the slave driven spindle (9) carrying a thread acting as a worm (10) about which is mounted the rack (11), which has an internal, axial thread engaging with the worm.

2. A clamping mechanism according to claim 1, wherein rotation of the toothed cam (15) between clamped and unclamped conditions is achieved by causing the toothed rack (11) to be driven axially of itself in a translatory motion.

3. A clamping mechanism according to any one of the preceding claims, wherein the rack (11) is captivated in at least one fixed slideway (12) so as to be able to be moved axially of itself in order to rotate the toothed drive cam (15).

4. A clamping mechanism according to any one of the preceding claims, wherein the drive cam (15) and/or its toothed profile (13) is/are formed from as much of a segment of a circle as is required to enable the cam face to be brought into and out of camming engagement with the co-operating face of a driven part of the cam mechanism to provide the clamping and unclamping conditions of the steering column.

5. A clamping mechanism according to any one of the preceding claims, wherein the toothed profile (13) of the drive cam (15) is formed directly on the periphery of the drive cam.

6. A clamping mechanism according to any one of the preceding claims, wherein the drive cam (15) is made of a plastics material or of a metal such as steel, or a metal alloy.

7. A clamping mechanism according to any one of the preceding claims, wherein the driven cam (17) is made of a plastics material or of a metal such as steel, or a metal alloy.

8. A clamping mechanism according to claim 7, wherein the driven cam (17) is fixed to a component such as a steering column support bracket (2), or is integral with a steering column support bracket, or is fixed to or is integral with a separate mounting part.

9. A clamping mechanism according to any one of the preceding claims, wherein the actuator (4) is mounted within a casing (13) having an inner side plate (3A) for mounting adjacent a steering column support bracket (2), the driven cam (17) being mounted on or integral with an inner side of said inner side plate of the casing, so as to lie within the casing when the casing is assembled.

10. A clamping mechanism according to claim 7, wherein the driven cam (17) is a separate cam component.

11. A clamping mechanism according to any one of the preceding claims and including a clamping bolt (18) passing through an operational axis of the cam mechanism and through slots (22) in at least one leg of a steering column mounting bracket (2) and at least one member (19) joined to a steering column support tube in which the steering column (1) rotates for steering purposes in use, these parts when assembled including adjoining areas which form the clamping surfaces of the clamping mechanism, the clamping bolt axis being at right angles, when assembled, to the axis of the steering column.

12. A clamping mechanism according to any one of the preceding claims, wherein the drive cam with pinion has an elongate portion (15A) between the rotational axis of the cam and the pinion teeth in order to gain effort through leverage.

13. A clamping mechanism according to any one of the preceding claims, wherein the driven cam (17A) is provided with a slideable block (17C) by which the driven cam is mounted, when the clamping mechanism is assembled, for slideable movement in a rake adjustable slot of the clamping mechanism.

14. A clamping mechanism according to any one of the preceding claims, wherein the actuator assembly including the cam mechanism is mounted for pivotal movement, so as to be able to pivot during rake adjustment of the steering column.

15. A steering column for a vehicle incorporating a clamping mechanism according to any one of the preceding claims.

16. A steering column according to claim 15,
wherein the clamping mechanism allows for rake and reach adjustment of the steering column and includes at least one pack of slotted lamellæ to enhance the clamping effect of the clamping mechanism.

## Patentansprüche

1. Ein Klemmmechanismus für eine einstellbare Lenksäule für ein Fahrzeug, der einen an eine Klemmvorrichtung gekoppelten Aktuator (4) zum Klemmen der Lenksäule in einer gewünschten Position beinhaltet, wobei die Klemmvorrichtung auf ein Lenksäulenmontagemittel wirkt, um dadurch die Lenksäule zu klemmen, wobei die Klemmvorrichtung ein Kurvengetriebe umfasst, um einen geklemmten und einen nicht geklemmten Zustand zu schaffen, und das Kurvengetriebe eine Zahnantriebsnocke (15) mit einer Nockenfläche umfasst, die ein in eine Zahnstange (11) eingreifendes peripheres Zahnprofil (13) trägt, die gemeinsam einen Zahnstangensatzmechanismus bilden, wobei die Antriebsnocke mit einer angetriebenen Nocke (17) reagiert, um den geklemmten und den nicht geklemmten Zustand bereitzustellen; **dadurch gekennzeichnet, dass** der Antrieb der Zahnstange (11) elektrisch durch einen Reversierelektromotor (5) bewirkt wird, und wobei zwischen einer Hauptantriebspindel (6) des Motors (5) und einer angetriebenen Tochterspindel eine Verzahnung bereitgestellt wird, wobei die angetriebene Tochterspindel (9) ein als eine Schnecke (10) wirkendes Gewinde trägt, um das die Stange (11), die ein internes, axiales, mit der Schnecke eingreifendes Gewinde aufweist, montiert ist.

2. Klemmmechanismus gemäß Anspruch 1, wobei die Drehung der Zahnnocke (15) zwischen dem geklemmten und dem nicht geklemmten Zustand erreicht wird, indem verursacht wird, dass die Zahnstange (11) axial für sich selbst in einer Translationsbewegung angetrieben wird.

3. Klemmmechanismus gemäß einem der vorhergehenden Ansprüche, wobei die Stange (11) in mindestens einer fixierten Gleitbahn (12) gehalten wird, um axial für sich selbst bewegt werden zu können, um die Zahnantriebsnocke (15) zu drehen.

4. Klemmmechanismus gemäß einem der vorhergehenden Ansprüche, wobei die Antriebsnocke (15) und/oder ihr Zahnprofil (13) von so viel von einem Segment eines Kreises wie erforderlich gebildet ist/sind, um zu ermöglichen, dass die Nockenfläche mit der kooperierenden Fläche eines angetriebenen Teils des Kurvengetriebes in Nockeneingriff und aus diesem heraus gebracht wird, um den klemmenden und nicht klemmenden Zustand der Lenksäule bereitzustellen.

5. Klemmmechanismus gemäß einem der vorhergehenden Ansprüche, wobei das Zahnprofil (13) der Antriebsnocke (15) direkt auf der Peripherie der Antriebsnocke gebildet ist.

6. Klemmmechanismus gemäß einem der vorhergehenden Ansprüche, wobei die Antriebsnocke (15) aus einem Kunststoffmaterial oder aus einem Metall wie etwa Stahl oder einer Metalllegierung gefertigt ist.

7. Klemmmechanismus gemäß einem der vorhergehenden Ansprüche, wobei die angetriebene Nocke (17) aus einem Kunststoffmaterial oder aus einem Metall wie etwa Stahl oder einer Metalllegierung gefertigt ist.

8. Klemmmechanismus gemäß Anspruch 7, wobei die angetriebene Nocke (17) an einer Komponente wie etwa einem Lenksäulenstützhalter (2) fixiert oder integral mit einem Lenksäulenstützhalter ist oder an einem separaten Montageteil fixiert oder integral mit diesem ist.

9. Klemmmechanismus gemäß einem der vorhergehenden Ansprüche, wobei der Aktuator (4) innerhalb eines Gehäuses (13) mit einer inneren Seitenplatte (3A) zur Montage neben einem Lenksäulenstützhalter (2) montiert ist, wobei die angetriebene Nocke (17) auf einer inneren Seite der inneren Seitenplatte des Gehäuses montiert oder integral mit dieser ist, um innerhalb des Gehäuses zu liegen, wenn das Gehäuse zusammengebaut ist.

10. Klemmmechanismus gemäß Anspruch 7, wobei die angetriebene Nocke (17) eine separate Nockenkomponente ist.

11. Klemmmechanismus gemäß einem der vorhergehenden Ansprüche, der einen Klemmbolzen (18) umfasst, der durch eine Betriebsachse des Kurvengetriebes und durch Schlitze (22) in mindestens einem Schenkel eines Lenksäulenmontagehalters (2) und mindestens einem an ein Lenksäulenstützrohr anschließenden Element (19), in dem sich die Lenksäule (1) bei Verwendung zu Lenkungszwecken dreht, verläuft, wobei diese Teile, wenn zusammengebaut, angrenzende Bereiche umfassen, die die Klemmoberflächen des Klemmmechanismus bilden, wobei sich die Achse des Klemmbolzens, wenn zusammengebaut, im rechten Winkel zu der Achse der Lenksäule befindet.

12. Klemmmechanismus gemäß einem der vorhergehenden Ansprüche, wobei die Antriebsnocke mit Ritzel einen länglichen Abschnitt (15A) zwischen der Drehachse der Nocke und den Ritzelzähnen aufweist, um Kraft durch Hebelwirkung zu erlangen.

13. Klemmmechanismus gemäß einem der vorhergehenden Ansprüche, wobei die angetriebene Nocke (17A) mit einem gleitfähigen Block (17C), durch den die angetriebene Nocke montiert ist, wenn der Klemmmechanismus zusammengebaut ist, zur gleitbaren Bewegung in einem im Neigungswinkel einstellbaren Schlitz des Klemmmechanismus versehen ist.

14. Klemmmechanismus gemäß einem der vorhergehenden Ansprüche, wobei die Aktuatoranordnung einschließlich des Kurvengetriebes zur Schwenkbewegung montiert ist, um während der Einstellung des Neigungswinkels der Lenksäule schwenken zu können.

15. Eine Lenksäule für ein Fahrzeug, die einen Klemmmechanismus gemäß einem der vorhergehenden Ansprüche einschließt.

16. Lenksäule gemäß Anspruch 15, wobei der Klemmmechanismus eine Einstellung des Neigungswinkels und der Reichweite der Lenksäule ermöglicht und mindestens ein Pack Schlitzlamellen zur Verbesserung der Klemmwirkung des Klemmmechanismus umfasst.

## Revendications

1. Un mécanisme de serrage pour une colonne de direction réglable destinée à un véhicule, comprenant un actionneur (4) couplé à un dispositif de serrage pour serrer la colonne de direction dans une position souhaitée, le dispositif de serrage agissant sur un moyen de montage de colonne de direction, pour serrer de ce fait la colonne de direction, dans lequel le dispositif de serrage comporte un mécanisme à came pour créer des états serrés et non serrés et le mécanisme à came comporte une came d'entraînement dentelée (15) avec une face de came qui porte un profil dentelé périphérique (13) se mettant en prise avec une crémaillère (11) qui, ensemble, forment un mécanisme à pignon et crémaillère, la came d'entraînement réagissant avec une came entraînée (17) pour fournir les états serrés et non serrés ; **caractérisé en ce que** l'entraînement de la crémaillère (11) est effectué de manière électrique au moyen d'un moteur électrique réversible (5) et dans lequel un engrènement est prévu entre un arbre d'entraînement maître (6) du moteur (5) et un arbre entraîné esclave, l'arbre entraîné esclave (9) portant un filetage qui agit comme une vis sans fin (10) autour de laquelle est montée la crémaillère (11), laquelle présente un filetage axial interne qui se met en prise avec la vis sans fin.

2. Un mécanisme de serrage selon la revendication 1, dans lequel la rotation de la came dentelée (15) entre des états serrés et non serrés est obtenue en amenant la crémaillère (11) à être entraînée axialement d'elle-même en un mouvement de translation.

3. Un mécanisme de serrage selon l'une quelconque des revendications précédentes, dans lequel la crémaillère (11) est capturée dans au moins une glissière fixe (12) de manière à pouvoir être déplacée axialement d'elle-même afin de faire tourner la came d'entraînement dentelée (15).

4. Un mécanisme de serrage selon l'une quelconque des revendications précédentes, dans lequel la came d'entraînement (15) et / ou son profil dentelé (13) est / sont formés en un segment de cercle aussi grand que nécessaire pour permettre à la face de came d'être amenée à entrer en engrènement de came et à en sortir avec la face coopérante d'une pièce entraînée du mécanisme à came afin de fournir les états de serrage et de non serrage de la colonne de direction.

5. Un mécanisme de serrage selon l'une quelconque des revendications précédentes, dans lequel le profil dentelé (13) de la came d'entraînement (15) est formé directement sur la périphérie de la came d'entraînement.

6. Un mécanisme de serrage selon l'une quelconque des revendications précédentes, dans lequel la came d'entraînement (15) est réalisée en une matière plastique ou en un métal tel que de l'acier, ou un alliage métallique.

7. Un mécanisme de serrage selon l'une quelconque des revendications précédentes, dans lequel la came entraînée (17) est réalisée en une matière plastique ou en un métal tel que de l'acier, ou un alliage métallique.

8. Un mécanisme de serrage selon la revendication 7, dans lequel la came entraînée (17) est fixée à un composant tel qu'un support de colonne de direction (2), ou est solidaire d'un support de colonne de direction, ou est fixée à ou est solidaire d'une pièce de montage distincte.

9. Un mécanisme de serrage selon l'une quelconque des revendications précédentes, dans lequel l'actionneur (4) est monté à l'intérieur d'un carter (13) présentant une plaque de côté interne (3A) pour un montage adjacent à un support de colonne de direction (2), la came entraînée (17) étant montée sur ou solidaire d'un côté interne de ladite plaque de côté interne du carter, de manière à se trouver à l'intérieur du carter lorsque le carter est assemblé.

10. Un mécanisme de serrage selon la revendication 7, dans lequel la came entraînée (17) est un composant de came distinct.

11. Un mécanisme de serrage selon l'une quelconque des revendications précédentes et comportant un boulon de serrage (18) qui passe à travers un axe opérationnel du mécanisme à came et à travers des fentes (22) dans au moins une patte d'un support de montage de colonne de direction (2) et au moins un élément (19) joint à un tube de support de colonne de direction dans lequel la colonne de direction (1) tourne à des fins de direction lors de l'utilisation, ces pièces comportant après assemblage des zones contiguës qui forment les surfaces de serrage du mécanisme de serrage, l'axe du boulon de serrage étant à angles droits, après assemblage, par rapport à l'axe de la colonne de direction.

12. Un mécanisme de serrage selon l'une quelconque des revendications précédentes, dans lequel la came d'entraînement à pignon présente une portion allongée (15A) entre l'axe de rotation de la came et les dents de pignon afin de gagner en effort via une force de levier.

13. Un mécanisme de serrage selon l'une quelconque des revendications précédentes, dans lequel la came entraînée (17A) est pourvue d'un bloc (17C) pouvant glisser grâce auquel la came entraînée est montée, lorsque le mécanisme de serrage est assemblé, pour se déplacer de manière à pouvoir glisser dans une fente d'inclinaison réglable du mécanisme de serrage.

14. Un mécanisme de serrage selon l'une quelconque des revendications précédentes, dans lequel l'assemblage d'actionneur comportant le mécanisme à came est monté pour se déplacer par pivotement, de manière à pouvoir pivoter lors du réglage de l'inclinaison de la colonne de direction.

15. Une colonne de direction destinée à un véhicule incorporant un mécanisme de serrage selon l'une quelconque des revendications précédentes.

16. Une colonne de direction selon la revendication 15, dans laquelle le mécanisme de serrage permet un réglage en inclinaison et en hauteur de la colonne de direction et comporte au moins un paquet de lamelles à fentes pour renforcer l'effet de serrage du mécanisme de serrage.
